# EUROPÄISCHE PATENTSCHRIFT

(11) **EP 4 458 134 B1**
(45) Veröffentlichungstag und Bekanntmachung des Hinweises auf die Patenterteilung: **12.11.2025**
(21) Anmeldenummer: 23171477.5
(22) Anmeldetag: 04.05.2023
(51) Int. Cl.: A01G 20/47, E01H 1/08

(54) **VORRICHTUNG UND VERFAHREN ZUR REINIGUNG EINER GARTENFLÄCHE VON UNRAT**
DEVICE AND METHOD FOR CLEANING A GARDEN AREA OF DEBRIS
DISPOSITIF ET PROCÉDÉ POUR NETTOYER UNE SURFACE DE JARDIN DES DÉBRIS

(43) Veröffentlichungstag der Anmeldung: 06.11.2024
(73) Patentinhaber: Lorenz, Matthias, 89518 Heidenheim (DE)
(72) Erfinder: Lorenz, Matthias, 89518 Heidenheim (DE)
(74) Vertreter: Lorenz, Matthias

(56) Entgegenhaltungen:
- AU-B2- 682 883
- DE-A1- 2 359 814
- DE-T2- 69 120 961
- GB-A- 1 093 412
- US-A- 5 018 240
- US-A- 5 287 591
- US-A- 5 781 962
- US-A- 5 951 780
- US-B2- 9 955 839

## Beschreibung

Die Erfindung betrifft eine Vorrichtung zur Reinigung einer Gartenfläche von Unrat, insbesondere zur Reinigung einer Schottergartenfläche von Laub, die in einer Vorschubrichtung entlang der Gartenfläche bewegbar ist, um den Unrat in einen Auffangraum zu befördern.

Die Erfindung betrifft auch einen Laubsauger, insbesondere einen Handlaubsauger, aufweisend eine Saugdüse und eine an einem unteren Ende des Laubsaugers befestigte, separate Vorrichtung zur Reinigung einer Gartenfläche von Unrat.

Die Erfindung betrifft außerdem eine Verwendung einer Vorrichtung zur Reinigung einer Schottergartenfläche von Laub, sowie ein Verfahren zur Reinigung einer Gartenfläche von Unrat, insbesondere zur Reinigung einer Schottergartenfläche von Laub.

Zur Vermeidung der unerwünschten Verwilderung von Gartenflächen wie Wiesen, bepflasterten oder geschotterten Wegen und insbesondere Schottergartenflächen, müssen diese regelmäßig von Verschmutzungen und Unrat befreit werden. Vor allem das Entfernen von Laub und laubähnlichem Unrat, der sich zwischen einzelnen Steinen abgelagert hat, gestaltet sich dabei als außerordentlich aufwändig. Insbesondere fallen bekanntermaßen jedes Jahr im Herbst große Mengen Laub von den Bäumen auf Gartenflächen, und spätestens in dieser Jahreszeit ist die Beseitigung des Laubes daher unabdingbar.

Die häufigsten Arten der Beseitigung sind das Zusammenrechen mit Handgeräten, das Fegen mit einem Besen oder das händische Auflesen der einzelnen Blätter zwischen den Steinen einer Schottergartenfläche, mit anschließendem Abtransport des so gesammelten Laubes mit einer Schubkarre. Dieses Vorgehen ist zeitaufwändig und mühsam.

Einfacher ist das Zusammenschieben des Laubes mit Laubbläsern und/oder das Aufnehmen des Laubes mit Laubsaugern. Für übliche Gartengrößen sind insbesondere Kombigeräte bekannt. Derartige Geräte werden in der Regel manuell von einem Benutzer getragen und entlang der Gartenfläche bewegt. Für ein Beispiel eines Laubsaugers, der zusätzlich mit einer Verkleinerungsfunktion für den Unrat mittels rotierender Messer ausgestattet ist, sei auf die DE 196 13 153 A1 verwiesen.

Die Reinigung von Gartenflächen mittels Laubsauger funktioniert allerdings häufig nur unzufriedenstellend. Insbesondere bei feuchtem Laub nach Regen oder Schnee oder bei tieferen Laubschichten lassen sich die einzelnen Blätter mitunter nicht vollständig aufsaugen, da diese miteinander verkleben und damit größere Verklumpungen bilden. Das Aufsaugen der Blätter gestaltet sich außerdem auch dann als schwierig, wenn sich das Laub zwischen einzelnen Steinen, beispielsweise einer Schottergartenfläche, angesammelt hat. Ein Erhöhen der Saugleistung und/oder eine mechanische Bearbeitung der Gartenfläche (z. B. mittels des vorderen Endes der Saugdüse) führt regelmäßig zu einem Einsaugen von Steinen, was den Laubsauger beschädigen und im Zweifel sogar zu gefährlichen Situationen führen kann, wenn die Steine aus dem Gerät herausgeschleudert werden, z. B. wenn ohne angeschlossenen Sammelbehälter gearbeitet wird.

Insbesondere für den Einsatz bei größeren Flächen werden Laubsaugdüsen als Anbaugeräte zusammen mit einem Fahrzeug verwendet. Zur Vergrößerung der Aufnahmekapazität ist hierbei die Saugdüse verbreitert, was die Aufnahmeleistung jedoch zunächst verringert. Um die Aufnahmeleistung wieder zu erhöhen, werden mitunter Bürstenwalzen in die Saugdüse eingebaut. Die Bürstenwalze wird hierbei in Vorschubrichtung der Vorrichtung angetrieben, so dass der Gutsfluss in den Saugschlauch hinein erhöht werden kann. Problematisch hierbei ist allerdings, dass durch die Bürstenwalze Laub und anderes Material nach vorne in Fahrtrichtung weggeschleudert wird und nur zum Teil aufgesaugt werden kann. Um ein Fortschleudern des Materials in einen Bereich vor oder seitlich der eigentlichen Saugdüse zu vermeiden, ist herkömmlicherweise zum Abfangen dieses Materials ein Blech im vorderen Bereich der Saugdüse angeordnet. Die Position dieses Bleches muss jeweils an die Schichtdicke des auf der Fläche bzw. auf dem Untergrund liegenden Materials angepasst und gegebenenfalls manuell versetzt werden. Das Versetzen des Bleches ist zum einen sehr umständlich und zeitaufwändig, zum anderen kann das Blech beim Überfahren von Steinen oder anderen Unebenheiten auf der Fläche hängenbleiben oder beschädigt werden. Außerdem kommt es bei einem nicht optimal positionierten Blech weiterhin zu einem Herausschleudern von Laub in Fahrtrichtung nach vorne und zu einem unbefriedigenden Arbeitsergebnis. Nicht zuletzt eignet sich eine derartige Vorrichtung nicht für einen getragenen, manuellen Betrieb, und daher insbesondere auch nicht für kleinere Gartenflächen.

Um die vorstehend beschriebene Vorrichtung mit der Bürstenwalze weiter zu verbessern, wird in der DE 10 2009 022 085 A1 eine Vorrichtung zur Reinigung einer Fläche von Unrat vorgeschlagen, die eine Saugdüse aufweist, der in Fahrtrichtung wenigstens eine Frontwalze vorgelagert ist. Die Frontwalze soll das Herausschleudern von Material nach vorne verhindern, und daher das vorstehend beschriebene Blech ersetzen. Die Frontwalze hat weiterhin den Vorteil, dass sie den Gutsfluss in den Auffangraum der Saugdüse hinein verbessert. Wenn ergänzend zu der Frontwalze außerdem die ursprüngliche, der Saugdüse nachgelagerte und in Vorschubrichtung angetriebene Bürstenwalze vorgesehen ist, soll sich die in der DE 10 2009 022 085 A1 beschriebene Vorrichtung ausschließlich noch für die Verwendung auf festem Untergrund eignen, da Bürsten auf weichem Untergrund, wie beispielsweise Kieswegen, nicht einsetzbar seien. Für die Verwendung auf derartigem Untergrund soll die Bürstenwalze gegen eine Walze mit festen Zinken ausgetauscht oder entfernt bzw. eingeschoben werden.

Auch die in der DE 10 2009 022 085 A1 vorgeschlagene Vorrichtung hat sich zur Verwendung auf Schottergartenflächen als ungeeignet herausgestellt. Ferner eignet sich auch eine solche Vorrichtung nicht für einen getragenen, manuellen Betrieb, der zur Bearbeitung kleinerer Gartenflächen jedoch erforderlich sein kann.

Zum technischen Hintergrund sei noch auf die folgenden Druckschriften verwiesen:
Die AU 682 883 B2 und die US 5,951,780 A betreffen Vorrichtungen zur Oberflächenbehandlung der Spielflächen von Sportanlagen, aufweisend eine Kombination aus Bürsten und Schlagstößel, die auf einer gemeinsamen Welle angeordnet sind. Die DE 23 59 814 A1 und die GB 1 093 412 A betreffen jeweils eine mit einem Fahrzeug verbindbare Vorrichtung zum Kehren von Flächen. Die US 5,287,591 A, die US 5,781,962 A und die DE 691 20 961 T2 betreffen jeweils Vorrichtungen zum Reinigen von Teppichen mit gegenläufig rotierenden Bürsten.

In Anbetracht des bekannten Standes der Technik besteht die Aufgabe der vorliegenden Erfindung darin, eine Vorrichtung zur Reinigung einer Gartenfläche von Unrat bereitzustellen, die den Unrat zuverlässig aufzunehmen vermag, und die vorzugsweise sicher und komfortabel von einem Benutzer verwendbar ist, insbesondere manuell bzw. frei tragbar.

Der vorliegenden Erfindung liegt auch die Aufgabe zugrunde, einen Laubsauger bereitzustellen, der eine Vorrichtung zur Reinigung einer Gartenfläche von Unrat aufweist, die den Unrat zuverlässig aufzunehmen vermag, und die vorzugsweise sicher und komfortabel von einem Benutzer verwendbar ist, insbesondere manuell bzw. frei tragbar.

Außerdem ist es Aufgabe der Erfindung, eine vorteilhafte Verwendung einer Vorrichtung zur Reinigung einer Schottergartenfläche von Laub bereitzustellen.

Ferner ist es Aufgabe der Erfindung, ein Verfahren zur Reinigung einer Gartenfläche von Unrat bereitzustellen, mittels dem der Unrat zuverlässig entfernt werden kann, und das vorzugsweise sicher und komfortabel durchführbar ist, insbesondere auch auf kleineren, nichtöffentlichen Gartenflächen.

Die Aufgabe wird für die Vorrichtung mit den in Anspruch 1 aufgeführten Merkmalen gelöst. Hinsichtlich des Laubsaugers wird die Aufgabe durch die Merkmale des Anspruchs 10 und betreffend die Verwendung durch Anspruch 11 gelöst. Für das Verfahren wird die Aufgabe schließlich durch Anspruch 12 gelöst.

Die abhängigen Ansprüche und die nachfolgend beschriebenen Merkmale betreffen vorteilhafte Ausführungsformen und Varianten der Erfindung.

Die Erfindung betrifft eine Vorrichtung zur Reinigung einer Gartenfläche von Unrat, die in einer Vorschubrichtung entlang der Gartenfläche bewegbar ist.

Unter einer "Gartenfläche" kann im Rahmen der Erfindung eine beliebige Bodenfläche im öffentlichen oder nichtöffentlichen Raum zu verstehen sein, auf der Pflanzen in Kultur genommen und somit gepflegt werden, auf der gestalterische Elemente im Außenbereich vorgesehen sind, die an eine derartige Fläche angrenzt und/oder die durch eine solche hindurch verläuft. Bei der "Gartenfläche" kann es sich insbesondere um einen Teil eines öffentlichen oder nichtöffentlichen Gartens oder Parks handeln. Es kann sich auch um einen zumindest teilweise bepflasterten, beschotterten oder auf sonstige Weise befestigten und abgegrenzten Weg oder um eine Straße handeln. Bei der Gartenfläche kann es sich auch um eine Wiese, einen Steingarten und insbesondere um einen Schottergarten handeln.

Die Erfindung eignet sich ganz besonders vorteilhaft (jedoch nicht ausschließlich) zur Reinigung einer Schottergartenfläche. Ein "Schottergarten" ist bekanntlich eine mit Steinen bedeckte Gartenfläche, in welcher die Steine das hauptsächliche Gestaltungsmittel darstellen. Pflanzen kommen in der Regel nicht oder nur in geringer Zahl vor. Als Steinmaterial kann der namensgebende Schotter zum Einsatz kommen (also in der Regel gebrochene Steine mit scharfen Kanten und ohne Rundungen), Geröll, Kies, Splitt und/oder sonstige Steine (u. a. Rundstein, Bruchstein, gebrochene Mineralstoffe, Geröllablagerungen und Schroppen), gegebenenfalls auch künstliche Steine, wie Kunststoffsteine oder Betonsteine. Die möglichen Steinmaterialien der Schottergartenfläche oder der Gartenfläche im Allgemeinen werden nachfolgende vereinfachend als "Steine" bezeichnet.

Unter "Unrat" können im Rahmen der Erfindung beliebige Gegenstände verstanden werden, die die Gartenfläche, auf der sie sich befinden, verschandeln. Insbesondere kann es sich bei dem "Unrat" um vegetative Bestandteile bzw. Verschmutzungen handeln, wie beispielsweise lose Blätter bzw. Laub, Grasschnitt, Zweige, Früchte und/oder Nüsse. Es kann sich bei dem "Unrat" gegebenenfalls aber auch um sonstige Verschmutzungen handeln, wie Papier, Plastik, Verpackungen und/oder Zigarettenstummel. Insbesondere kann es sich um jegliche Gegenstände handeln, die mittels eines Laubsaugers oder eines Staubsaugers in der Regel aufsaugbar sind.

Die vorgeschlagene Vorrichtung eignet sich insbesondere zur Reinigung einer Schottergartenfläche von Laub.

Die Vorrichtung kann auf beliebige Weise in Vorschubrichtung oder entgegen der Vorschubrichtung bewegbar sein. Insbesondere kann die Vorrichtung manuell von einem Benutzer bewegbar sein, beispielsweise indem der Benutzer die Vorrichtung trägt und oberhalb der Gartenfläche entlangbewegt. Für einen manuellen Betrieb ist es allerdings nicht unbedingt erforderlich, dass der Benutzer die Vorrichtung trägt - die Vorrichtung kann beispielsweise auch mittels Rädern auf der Gartenfläche von dem Benutzer schieb- oder ziehbar sein. Die Vorrichtung kann gegebenenfalls auch maschinell in Vorschubrichtung entlang der Gartenfläche bewegbar sein, beispielsweise von einem Fahrzeug geschoben oder gezogen werden.

Es kann auch vorgesehen sein, dass die Vorrichtung ferngesteuert, teilautonom oder vollständig autonom agiert, um die Gartenfläche zu reinigen. Die Vorrichtung kann beispielsweise als mobiler Serviceroboter oder als dauerhafte oder optionale Komponente eines solchen Serviceroboters ausgebildet sein, z. B. ähnlich wie ein Rasenmähroboter.

Insofern im Rahmen der Erfindung davon gesprochen wird, dass die Vorrichtung entlang der Vorschubrichtung ("vorwärts") bewegt wird oder bewegbar ist, so ist die Vorrichtung in der Regel zumindest auch entgegen der Vorschubrichtung ("rückwärts") bewegbar. Die Bewegung der Vorrichtung entlang der Gartenfläche kann dabei grundsätzlich einem beliebigen Pfad folgen, den in der Regel der Benutzer der Vorrichtung vorgibt.

Die "Vorschubrichtung" ist im Rahmen der Erfindung insbesondere vor dem Hintergrund der Definition der relativen Positionen der nachfolgend noch näher beschriebenen Vorrichtungsmerkmale angegeben, um klar und eindeutig zum Ausdruck zu bringen, welche Vorrichtungsmerkmale den anderen vorgelagert oder nachgelagert sind, jeweils in Bezug zu der vorgesehen Bewegungsrichtung der Vorrichtung im vorgesehenen Normal- bzw. Regelbetrieb.

Erfindungsgemäß weist die Vorrichtung einen Auffangraum zur Akkumulation des Unrats auf.

Der Auffangraum kann zumindest zur vorübergehenden Aufnahme bzw. Akkumulation des Unrats ausgebildet sein. Vorzugsweise ist der Auffangraum nicht zur endgültigen Lagerung des Unrats in der Vorrichtung vorgesehen, sondern stellt nur eine Art Zwischenspeicher für den Unrat dar, so dass der Unrat ausgehend von dem Auffangraum zyklisch oder kontinuierlich weiterbewegt werden kann, beispielsweise bis der Unrat schließlich den nachfolgend noch genannten Sammelbehälter erreicht oder kontrollierbar durch eine Ausgabeöffnung aus der Vorrichtung ausgegeben wird.

Die Vorrichtung kann ein Vorrichtungsgehäuse aufweisen. Das Vorrichtungsgehäuse kann mehrteilig, aus mehreren Gehäusebauteilen, oder einstückig aus einem einzigen Gehäusebauteil ausgebildet sein. Das Vorrichtungsgehäuse kann beispielsweise aus einem Kunststoff und/oder aus einem Metall ausgebildet sein.

Der Auffangraum wird vorzugsweise von dem Vorrichtungsgehäuse, insbesondere von einem Gehäusebauteil eines mehrteiligen Vorrichtungsgehäuses, zumindest abschnittsweise begrenzt und ist damit im Wesentlichen, vorzugsweise vollständig, innerhalb des Vorrichtungsgehäuses ausgebildet. Es kann vorgesehen sein, dass das Vorrichtungsgehäuse, insbesondere ein Gehäusebauteil, zur Eingrenzung des Auffangraums einen trichterförmigen oder haubenartigen Abschnitt ausbildet. Das Vorrichtungsgehäuse kann im Bereich des Auffangraums transparent ausgebildet sein und/oder eines oder mehrere Sichtfenster aufweisen (Öffnungen oder transparente Abschnitte, die ein Sichtfenster ausbilden), um den Auffangraum von außerhalb einsehbar zu gestalten, was es dem Benutzer der Vorrichtung insbesondere ermöglichen kann, den Auffangraum während der Verwendung der Vorrichtung oder nach der Verwendung der Vorrichtung auf Verstopfungen hin zu kontrollieren.

Erfindungsgemäß weist die Vorrichtung eine vordere Bürste und eine hintere Bürste auf, wobei die Bürsten jeweils zwischen der Gartenfläche und dem Auffangraum angeordnet sind, und wobei die vordere Bürste in Vorschubrichtung der hinteren Bürste vorgelagert angeordnet ist.

Der Auffangraum ist in der Vorrichtung daher oberhalb der Bürsten ausgebildet; die Bürsten sind also zwischen der Gartenfläche und dem Auffangraum positioniert, wenn die Vorrichtung im Normalbetrieb entlang der Gartenfläche bewegt wird. Vorzugsweise sind die Bürsten derart an einem, im Normalbetrieb der Vorrichtung der Gartenfläche zugewandten, unteren Ende der Vorrichtung angeordnet, so dass zumindest eine der Bürsten unmittelbar in Kontakt mit der Gartenfläche zu treten vermag, währen die Vorrichtung entlang der Gartenfläche bewegt wird.

Die Angabe "in Vorschubrichtung vorgelagert" bedeutet, dass das vorgelagerte Bauteil, also beispielsweise die vordere Bürste, bei einer Bewegung der Vorrichtung in Vorschubrichtung früher mit dem Unrat in Kontakt kommt als das hintere, nachgelagerte Bauteil, also beispielsweise die hintere Bürste.

Die vordere Bürste und die hintere Bürste können in identischer Bauart ausgeführt sein. Die Bürsten können sich allerdings auch voneinander unterscheiden, beispielsweise im Bürstendurchmesser bzw. in der Borstenlänge, in der Borstendichte oder in dem Borstenmaterial, wie nachfolgend noch angegeben.

Die vordere Bürste und/oder die hintere Bürste sind vorzugsweise längliche Bürsten, mit einer jeweiligen länglichen Drehachse. Im Normalbetrieb sind die Drehachsen vorzugsweise zumindest im Wesentlichen horizontal zu der Gartenfläche angeordnet.

An dieser Stelle sei erwähnt, dass grundsätzlich auch mehrere Einzelbürsten vorgesehen sein können, die jeweils zueinander koaxial ausgerichtet sind, so dass die Drehachsen der Einzelbürsten zusammenfallen, um mittels der Einzelbürsten eine gemeinsame vordere Bürste und/oder hintere Bürste auszubilden. Außerdem können neben der vorderen Bürste und der hinteren Bürste auch noch weitere Bürsten vorgesehen sein, beispielsweise eine noch vor der vorderen Bürste oder hinter der hinteren Bürste angeordnete weitere Bürste. Vorzugsweise weist die Vorrichtung allerdings nur genau eine vordere Bürste und genau eine hintere Bürste und sonst keine weitere Bürste mehr auf.

Vorzugsweise sind die vordere Bürste und die hintere Bürste einander unmittelbar benachbart angeordnet, so dass keine weitere Bürste zwischen der vorderen Bürste und der hinteren Bürste positioniert ist.

Erfindungsgemäß weist die Vorrichtung außerdem eine Antriebsbaugruppe auf. Die vordere Bürste ist entgegen der Vorschubrichtung drehbar und die hintere Bürste ist von der Antriebsbaugruppe in Vorschubrichtung angetrieben, um den Unrat zwischen der vorderen Bürste und der hinteren Bürste hindurch bis in den Auffangraum zu befördern.

Darunter, dass die hintere Bürste "in Vorschubrichtung" angetrieben ist, ist zu verstehen, dass sich die Borsten der hinteren Bürste, die der Gartenfläche zugewandt sind bzw. die bei der Benutzung der Vorrichtung über die Gartenfläche streichen bzw. die unmittelbar in Kontakt mit der Gartenfläche kommen, nach vorne, also in Richtung der vorderen Bürste und damit in Vorschubrichtung bewegen. Die vordere Bürste vermag sich hierzu entgegengesetzt zu drehen, so dass sich die Borsten der vorderen Bürste, die der Gartenfläche zugewandt sind bzw. die bei der Benutzung der Vorrichtung über die Gartenfläche streichen bzw. die unmittelbar in Kontakt mit der Gartenfläche kommen, nach hinten, also in Richtung der hinteren Bürste und damit entgegen der Vorschubrichtung bewegen.

Insbesondere weist die Antriebsbaugruppe eine erste Antriebseinheit auf, um die hintere Bürste anzutreiben.

Die vordere Bürste kann in der Vorrichtung frei drehbar gelagert sein, so dass sich die vordere Bürste während der Bewegung in Vorschubrichtung auf der Gartenfläche abzurollen vermag, was unmittelbar zu der Bewegung entgegen der Vorschubrichtung führt. Ferner kann, wenn die Borsten der hinteren Bürste in Eingriff mit den Borsten der vorderen Bürste stehen, gegebenenfalls auch ein mittelbarer Antrieb der vorderen Bürste entgegen der Drehrichtung der hinteren Bürste induziert werden. Es ist daher nicht unbedingt erforderlich, dass die vordere Bürste aktiv angetrieben wird.

Dadurch, dass die Antriebsbaugruppe die hintere Bürste in Vorschubrichtung - und damit entgegen der Drehrichtung der vorderen Bürste - antreibt, wird der Unrat von der Gartenfläche mittig zwischen den beiden Bürsten hindurch in den Auffangraum befördert, der sich oberhalb der beiden Bürsten befindet. Die Bürsten vermögen dabei mit ihren Borsten auch in Spalten, Ritzen und Löcher der Gartenfläche einzudringen, also beispielsweise zwischen Steine einer Schottergartenfläche. Auf diese Weise kann der Unrat auch von sehr unzugänglichen Stellen aufgesammelt werden. Auch wenn sich einzelne Steine auf dem Unrat angesammelt haben, kann der Unrat dennoch aufgesammelt werden, da die Bürsten die Steine mechanisch beeinflussen und gegebenenfalls unter den Steinen abgelagerten Unrat überhaupt erst zutage fördern. Dennoch werden die Steine nicht nach vorne, hinten oder zur Seite weggeschleudert, sondern vielmehr im Bereich der Gartenfläche zwischen den beiden Bürsten sicher zusammengetragen.

Ein weiterer vorteilhafter Effekt der Verwendung der Bürsten zum Aufsammeln des Unrats ergibt sich dadurch, dass der Unrat durch die Bürsten gegebenenfalls auch zerkleinert wird. Einzelne Blätter oder Zweige werden somit zumindest teilweise gebrochen und sind damit einfacher aufzusammeln und beanspruchen weniger Volumen bei der späteren Lagerung. Auch der Weitertransport von dem Auffangraum in den nachfolgend noch genannten Sammelbehälter kann durch die besagte Zerkleinerung vereinfacht werden.

Ein vorteilhafter Nebeneffekt der Behandlung der Gartenfläche mit den Bürsten kann außerdem eine Reinigung der Gartenfläche durch die über die Gartenfläche streichenden Borsten der Bürsten darstellen. Zumindest die sichtbaren Teile der Steine einer Schottergartenfläche können mittels der Vorrichtung daher gegebenenfalls auch von anhaftender Verschmutzung gereinigt werden.

In einer Ausgestaltung der Erfindung kann optional sogar vorgesehen sein, im Bereich der vorderen Bürste und/oder der hinteren Bürste ein Reinigungs- oder Pflegemittel, eine Reinigungsflüssigkeit und/oder schlicht Wasser zuzugeben, um gleichzeitig mit dem Aufsammeln des Unrats die Gartenfläche zu reinigen. Die Vorrichtung kann hierzu beispielsweise ein Reservoir für das Reinigungs- oder Pflegemittel, die Reinigungsflüssigkeit und/oder einen Wassertank aufweisen. Optional kann auch ein Anschluss zur Zuführung des Reinigungs- oder Pflegemittels, der Reinigungsflüssigkeit und/oder des Wassers vorgesehen sein, wie beispielsweise ein Wasseranschluss zur Verbindung mit einem herkömmlichen Gartenschlauch.

In einer vorteilhaften Weiterbildung der Erfindung kann vorgesehen sein, dass die vordere Bürste von der Antriebsbaugruppe entgegen der Vorschubrichtung angetrieben ist.

Auch wenn ein Antrieb der vorderen Bürste nicht unbedingt erforderlich ist, um die vorteilhafte Funktion der Vorrichtung zu gewährleisten, kann ein Antrieb auch der vorderen Bürste den vorteilhaften Effekt der Vorrichtung noch wesentlich erhöhen.

Vorzugsweise wird die vordere Bürste mit derselben Umdrehungszahl angetrieben wie die hintere Bürste. Die Umdrehungszahlen können sich aber auch unterscheiden. Es kann vorgesehen sein, dass die vordere Bürste und/oder die hintere Bürste mit einer Dreh- bzw. Winkelgeschwindigkeit von 0,5 bis 50,0 Umdrehungen pro Sekunde angetrieben werden, vorzugsweise mit 1,0 bis 25 Umdrehungen pro Sekunde, besonders bevorzugt mit 2,0 bis 20 Umdrehungen pro Sekunde. Auch andere Drehgeschwindigkeiten, wie beispielsweise 3,0 bis 10,0 Umdrehungen pro Sekunde (z. B. etwa 3,0 bis 4,0 Umdrehungen pro Sekunde) oder 5,0 bis 8,0 Umdrehungen pro Sekunde können allerdings vorgesehen sein.

Es kann vorgesehen sein, dass die Antriebsbaugruppe eine erste Antriebseinheit aufweist, um die hintere Bürste anzutreiben, wobei die erste Antriebseinheit außerdem eingerichtet sein kann, um auch die vordere Bürste anzutreiben. Um die gegenläufige Drehrichtung zu ermöglichen kann vorzugsweise ein Getriebe vorgesehen sein, insbesondere ein Zahnradgetriebe (beispielsweise zumindest eine Zahnradpaarung), ein Zahnriemengetriebe, ein Kettengetriebe, ein Lamellenkettengetriebe, ein Riemengetriebe, ein Kegelringgetriebe, ein Wälzkörpergetriebe und/oder ein Rollringgetriebe. Entsprechende Getriebe zur Änderung einer Drehrichtung sind bekannt.

Es kann aber auch vorgesehen sein, dass die Antriebsbaugruppe neben der ersten Antriebseinheit noch eine zweite Antriebseinheit aufweist, mittels der die vordere Bürste separat angetrieben wird. Der Antrieb der Bürsten kann dadurch besonders flexibel und unabhängig voneinander möglich sein, wobei auch die Kraftübertragung zwischen Antriebseinheit und Bürste verbessert sei kann.

Gemäß einer Weiterbildung der Erfindung kann vorgesehen sein, dass die Bürsten jeweils einen koaxial zu der Drehachse verlaufenden, zentralen Bürstenkörper aufweisen, über deren Außenmantelfläche mehrere Borsten der Bürste verteilt sind.

Vorzugsweise ist ein zylindrischer Bürstenkörper vorgesehen, insbesondere mit rundem Querschnitt. Der Querschnitt des Bürstenkörpers kann aber beispielsweise auch ein Dreieck, ein Viereck oder ein sonstiges Vieleck bzw. Polygon beschreiben.

Der Bürstenköper kann optional zumindest abschnittsweise elastisch ausgebildet sein. Vorzugsweise ist allerdings ein starrer Bürstenkörper vorgesehen.

Es kann vorgesehen sein, dass die vordere Bürste und die hintere Bürste derart relativ zueinander angeordnet sind, dass die Borsten der Bürsten ineinander eingreifen.

Es hat sich gezeigt, dass die Förderung des Unrats besonders vorteilhaft erfolgen kann, wenn die Borsten der vorderen Bürste und der hinteren Bürste ineinander eingreifen. Dies führt außerdem auch dazu, dass größere, unerwünschte Festkörper, beispielsweise die Steine einer Schottergartenfläche, nicht zwischen den Bürsten hindurch in den Auffangraum gelangen können. Der Abstand zwischen den Bürsten kann dabei entsprechend der Gartenfläche (also beispielsweise der durchschnittlichen Größe von Steinen der Gartenfläche) und dem aufzusammelnden Unrat optimiert sein.

Es kann vorgesehen sein, dass der Abstand zwischen der vorderen Bürste und der hinteren Bürste einstellbar ist, so dass der Benutzer der Vorrichtung die Vorrichtung optimal an die Gartenfläche anpassen kann. Hierzu kann beispielsweise eine Linearführungseinheit vorgesehen sein, insbesondere ein Blech mit einer länglichen Ausnehmung, in der beispielsweise die Antriebseinheiten geführt und in der gewünschten Position festgelegt werden können. Auch ein Rasterblech mit mehreren Bohrungen oder Aufnahmestiften oder Ähnlichem kann vorgesehen sein.

Gemäß einer Weiterbildung der Erfindung kann insbesondere vorgesehen sein, dass sich die Borsten zumindest einer der Bürsten bis zu der Außenmantelfläche der jeweils anderen Bürste erstrecken, insbesondere bis zu dem Bürstenkörper der jeweils anderen Bürste.

Diese Ausgestaltung eignet sich ganz besonders vorteilhaft, um den Unrat wie gewünscht in den Auffangraum zu befördern, die unerwünschten Festkörper allerdings vom Transport zwischen den Bürsten auszuschließen.

Die Borsten zumindest einer der Bürsten können gegebenenfalls auch den Bürstenkörper der anderen Bürste berühren und daher im Betrieb beispielsweise an dem Bürstenkörper entlangstreifen.

Vorzugsweise erstrecken sich die Borsten beider Bürsten jeweils bis zu der Außenmantelfläche des Bürstenkörpers der jeweils anderen Bürste.

Die Borsten der Bürsten können optional auch entlang einer Innenmantelfläche des Vorrichtungsgehäuses oder eines Teils des Vorrichtungsgehäuses, beispielsweise entlang einer Innenmantelfläche einer Haube, entlangstreifen. Die Vorrichtung kann dadurch gegebenenfalls kompakter ausgebildet werden, obwohl ein großer Abstand zwischen den Bürsten vorhanden ist, was das Aufsammeln des Unrats optimieren kann. Vorzugsweise sind die Borsten der Bürsten allerdings von einer derartigen Innenmantelfläche beabstandet.

In der Regel weisen alle Borsten der vorderen Bürste und/oder der hinteren Bürste dieselbe Länge auf. Die vordere Bürste kann gegebenenfalls aber auch Borsten mit einer anderen Länge aufweisen als die hintere Bürste.

Außerdem kann in einer Weiterbildung der Erfindung vorgesehen sein, dass zumindest eine der Bürsten unterschiedlich lange Borsten aufweist. Vorzugsweise weisen beide Bürsten jeweils unterschiedlich lange Borsten auf.

Die vordere Bürste und/oder die hintere Bürste können insbesondere zwei Gruppen (oder noch mehr Gruppen) von Borsten mit jeweils unterschiedlicher Bauart, insbesondere unterschiedlicher Länge, unterschiedlicher Dicke, unterschiedlichem Aufbau und/oder unterschiedlichem Material, aufweisen.

Die verschiedenen Gruppen von Borsten können in Umfangsrichtung abwechselnd über den Bürstenkörper verteilt angeordnet sein. Die verschiedenen Gruppen von Borsten können alternativ oder ergänzend auch in Längsrichtung abwechselnd über den Bürstenkörper verteilt angeordnet sein. Die verschiedenen Gruppen von Borsten können gleichmäßig bzw. regelmäßig oder unregelmäßig über den Bürstenkörper verteilt sein.

Wenn verschiedene Gruppen von Borsten vorgesehen sind, kann sich die Vorrichtung flexibler für verschiedene Gartenflächen eignen. Beispielsweise können einige Borsten tiefer zwischen Steine der Gartenfläche eindringen, um den Unrat überhaupt erst zutage zu fördern, während andere, kürzere Borsten den Unrat von der Oberseite der Gartenfläche aufnehmen.

Die vordere Bürste und/oder die hintere Bürste kann beispielsweise einen Außendurchmesser (von Borste zu Borste) von 2 cm bis 50 cm aufweisen, vorzugsweise von 2 cm bis 20 cm, besonders bevorzugt von 2 cm bis 15 cm. Beispielsweise kann ein Außendurchmesser von Borste zu Borste von 5 cm bis 20 cm oder von 5 cm bis 10 cm vorgesehen sein. Grundsätzlich kann der Durchmesser in Abhängigkeit der jeweiligen Gartenfläche ausgewählt werden.

Die Dicke bzw. der Durchmesser der einzelnen Borsten der vorderen Bürste und/oder der hinteren Bürste kann beispielsweise 0,1 mm bis 5,0 mm betragen, vorzugsweise 0,2 mm bis 2,0 mm, ganz besonders bevorzugt 0,3 mm bis 1,0 mm. Grundsätzlich kann die Dicke der Borsten in Abhängigkeit der jeweiligen Gartenfläche ausgewählt werden.

Die axiale Länge der vorderen Bürste und/oder der hinteren Bürste kann beispielsweise 1 cm bis 2 m betragen, vorzugsweise 5 cm bis 1 m, besonders bevorzugt 10 cm bis 25 cm. Grundsätzlich kann die Länge der Bürsten in Abhängigkeit der jeweiligen Gartenfläche ausgewählt werden.

Die Borsten der vorderen Bürste und/oder der hinteren Bürste sind vorzugsweise jeweils aus mehreren Einzelfasern gebildet, die gemeinsam eine Borste ausbilden, beispielsweise entsprechend miteinander verflochten sind. Es können Borstenbündel vorgesehen sein. Die Borsten können aber jeweils auch aus genau einer Faser bestehen.

Es kann vorgesehen sein, dass die Borsten der vorderen Bürste und/oder der hinteren Bürste aus Kunststofffasern, Naturfasern und/oder Draht ausgebildet sind oder ein derartiges Material aufweisen. Insbesondere können die Borsten aus einem Kunststoffmaterial, wie Polyamid oder Nylon, ausgebildet sein, wenn eine besonders langlebige bzw. robuste Vorrichtung bereitgestellt werden soll. Naturfasern sind allerdings besonders nachhaltig und für die Umwelt schonender, da eventueller Bürstenabrieb abbaubar sein kann, weshalb Naturfasern in der Regel bevorzugt sind.

Optional kann die vordere Bürste und/oder die hintere Bürste von dem Benutzer austauschbar sein, um die Vorrichtung zur Verwendung mit verschiedenen Gartenflächen optimal und modular anzupassen.

Die Antriebsbaugruppe kann grundsätzlich einen beliebigen Aufbau aufweisen und beispielsweise elektrisch, pneumatisch, hydraulisch und/oder manuell betrieben sein. Auch eine auf einem Verbrennungsmotor basierende Antriebsbaugruppe kann vorgesehen sein.

In einer Weiterbildung der Erfindung kann insbesondere vorgesehen sein, dass die Antriebsbaugruppe wenigstens einen Elektromotor aufweist, um zumindest die hintere Bürste anzutreiben. Die erste Antriebseinheit der Antriebsbaugruppe kann daher als Elektromotor ausgebildet sein.

Eine elektrische Antriebsbaugruppe lässt sich insbesondere für eine Vorrichtung vorteilhaft einsetzen, die auf kleineren, insbesondere privaten bzw. nichtöffentlichen Gartenflächen, zum Einsatz kommen soll.

Es kann vorgesehen sein, dass die Antriebsbaugruppe einen ersten Elektromotor aufweist (erste Antriebseinheit), der die hintere Bürste antreibt und einen zweiten Elektromotor aufweist (zweite Antriebseinheit), der die vordere Bürste antreibt. Es kann aber auch vorgesehen sein, dass die Antriebsbaugruppe nur genau einen Elektromotor (erste Antriebseinheit) aufweist, der die vordere Bürste und die hintere Bürste gemeinsam antreibt, wobei die Antriebsbaugruppe dann außerdem ein Getriebe aufweisen kann, wie bereits vorstehend erwähnt.

Insbesondere bei einer elektrischen Antriebsbaugruppe, bzw. wenn wenigstens ein Elektromotor vorgesehen ist, kann die Vorrichtung außerdem eines oder mehrere Akkupacks aufweisen, um die Vorrichtung, insbesondere die Antriebsbaugruppe bzw. den Elektromotor, kabellos mit elektrischer Energie zu versorgen. Auch eine kabelgebundene elektrische Versorgung kann allerdings vorgesehen sein. Es kann gegebenenfalls auch ein teilweise oder vollständig autarkes Energieversorgungssystem vorgesehen sein. Beispielsweise kann vorgesehen sein, dass die Vorrichtung und/oder eine Ladestation für die Vorrichtung eine Photovoltaikanlage aufweist.

Das Drehmoment des Elektromotors kann beispielsweise 1,0 Nm bis 10,0 Nm betragen, vorzugsweise 2,0 Nm bis 8,0 Nm, besonders bevorzugt 3,0 Nm bis 6,0 Nm, beispielsweise 4,5 Nm.

Eine vorteilhafte Alternative oder Ergänzung zu einer elektrischen Antriebsbaugruppe kann, insbesondere bei einem Einsatz für große Gartenflächen, eine Antriebsbaugruppe mit wenigstens einem Verbrennungsmotor darstellen.

Mittels des Verbrennungsmotors kann sich die Vorrichtung gegebenenfalls auch über die Gartenfläche bewegen lassen, beispielsweise mittels separater, angetriebener Antriebsräder. Auch ein Elektromotor kann sich aber grundsätzlich dazu eignen, die Vorrichtung mittels angetriebener Antriebsräder über die Gartenfläche zu bewegen oder den Benutzer bei der Bewegung der Vorrichtung entlang der Gartenfläche zumindest zu unterstützen.

In einer Ausgestaltung der Erfindung kann vorgesehen sein, dass ein unterer Abschnitt der Vorrichtung, beispielsweise der Auffangraum mit den in dem Auffangraum angeordneten Bürsten, oder nur eine oder beide Bürsten, pendelnd aufgehängt sind. Auf diese Weise kann sich die Vorrichtung der Gartenfläche und gegebenenfalls vorhandenen Unebenheiten der Gartenfläche gut anpassen. Beispielsweise kann vorgesehen sein, dass die vordere Bürste und/oder die hintere Bürste jeweils unabhängig voneinander an ihren längsseitigen Enden (gegebenenfalls zusammen mit jeweiligen Komponenten der Antriebsbaugruppe) frei schwingend aufgehängt sind.

Die vordere Bürste und die hintere Bürste werden vorzugsweise gleichschnell, insbesondere synchron, angetrieben. Die vordere Bürste und die hintere Bürste können aber auch asynchron angetrieben werden, beispielsweise mit verschiedenen Drehgeschwindigkeiten.

Erfindungsgemäß ist vorgesehen, dass die Vorrichtung eine Fördereinrichtung aufweist, um den Unrat von dem Auffangraum weiter zu befördern, insbesondere in einen Sammelbehälter.

Bei dem Sammelbehälter kann es sich beispielsweise um einen mit der Vorrichtung lösbar verbundenen Auffangsack oder einen sonstigen Auffangbehälter handeln, beispielsweise um einen Auffangsack aus einem Polyesterstoff, gegebenenfalls auch um einem kompostierbaren Gartenabfallsack, den der Benutzer regelmäßig entleeren kann. Alternativ kann die Fördereinrichtung den Unrat aber auch an einer definierten Stelle aus der Vorrichtung ausscheiden. Bevorzugt ist allerdings die Verwendung eines Sammelbehälters.

Erfindungsgemäß ist vorgesehen, dass die Fördereinrichtung eine Saugereinheit zum Aufsaugen des Unrats aufweist.

Die Saugereinheit kann mit einem Gebläse ausgerüstet sein, welches einen Unterdruck erzeugt. An der Saugseite der Saugereinheit kann eine Ansaugöffnung oder Saugdüse vorgesehen sein (nachfolgend wird zur Vereinfachung zusammenfassend der Begriff "Saugdüse" verwendet). Die Saugereinheit kann außerdem eine Ausgabeöffnung oder Ausgabedüse zum Ausgeben des Unrats aufweisen (nachfolgend wird zur Vereinfachung zusammenfassend der Begriff "Ausgabedüse" verwendet), die in den Sammelbehälter mündet oder eine kontrollierte Ausgabe des Unrats aus der Vorrichtung ermöglicht. Die angesaugte Luft und die mit der Luft angesaugten Festkörper (z. B. der Unrat) können optional durch einen oder mehrere Filter oder einen Zyklon (auch bekannt als "Fliehkraftabscheider") geleitet werden, um die Feststoffe und Schmutzpartikel, wie Staub oder sonstige Schmutzteilchen, aus dem Luftstrom herauszufiltern.

Erfindungsgemäß ist eine Saugdüse der Saugereinheit in einem von den Bürsten abgewandten, oberen Endabschnitt des Auffangraums angeordnet, um den Unrat unmittelbar aufzusaugen, wenn dieser durch die Bürsten hindurchbefördert wird.

Bei der Saugereinheit kann es sich beispielsweise um eine in die Vorrichtung integrierte, elektrisch oder durch einen Verbrennungsmotor angetriebene Saugereinheit handeln. Bei der Saugereinheit kann es sich aber beispielsweise auch um eine separate Saugereinheit handeln, die für den Einsatz der Vorrichtung mit der Vorrichtung verbunden, grundsätzlich aber auch separat verwendet werden kann, wie ein Staubsauger (insbesondere ein Industriesauger) oder ein Laubbläser bzw. Laubsauger.

Insofern die Saugereinheit als elektrische Saugereinheit ausgebildet ist, kann diese mittels derselben elektrischen Versorgungseinrichtung versorgt werden wie die erste Antriebseinheit und/oder die zweite Antriebseinheit (also beispielsweise von wenigstens einem Akkupack oder einer kabelgebundenen Netzverbindung über einen Netzstecker).

Mit einem Akkupack ist in diesem Zusammenhang sowohl ein Akkumulator mit einer einzelnen Akkumulatorzelle (auch Sekundärzelle genannt), als auch ein zusammengeschaltetes Paket mit mehreren Akkumulatorzellen gemeint. Mit einem Akkupack kann auch ein Speicher für elektrische Energie gemeint sein, der nicht oder nicht ausschließlich elektrochemisch aufgebaut ist, also zum Beispiel ein Kondensator. Im Sinne der Erfindung werden auch Batterien bzw. Batteriepacks, d. h. nicht wieder aufladbare Speicher für elektrische Energie, zu dem Begriff "Akkupack" gezählt.

Es kann vorgesehen sein, dass wenigstens eines der verwendeten Akkupacks ein Lithium-Ionen-Akkupack ist. Insbesondere bei Verwendung von Lithium-Ionen-Akkupacks, deren Akkuzellen eine Nennspannung von 3,6 Volt aufweisen, kann vorgesehen sein, dass das Akkupack eine Nennspannung von 3,6 Volt, 7,2 Volt, 10,8 Volt, 14,4 Volt, 18,0 Volt, 36,0 Volt oder 72,0 Volt aufweist. Bei dem Akkupack kann es sich aber auch um einen Nickel-Metall-Hybridakkumulator, Nickel-Cadmium-Akkumulator oder Bleiakkumulator handeln. Grundsätzlich ist die Erfindung nicht auf die Verwendung mit einem bestimmten Typ Akkupack begrenzt zu verstehen.

Mitunter kann es vorkommen, dass unerwünschte Festkörper, wie Steine der Gartenfläche, von den Bürsten aufgesammelt und in den Auffangraum transportiert werden. Vorzugsweise sollte verhindert werden, dass diese Festkörper von dem Auffangraum weiter in den Sammelbehälter transportiert werden. Dies ist allerdings nicht zwingend erforderlich, da mittels der Vorrichtung erfahrungsgemäß grundsätzlich nur wenige unerwünschte Festkörper in den Auffangraum gelangen.

Es kann eine Steuereinrichtung vorgesehen sein, mittels der die Antriebsbaugruppe angesteuert wird. Die Antriebsbaugruppe kann beispielsweise auch dahingehend überwacht werden, dass ein Blockieren der Bürsten erfasst wird (z. B. durch sehr groben Unrat, wie Steine oder dergleichen). Insofern erkannt wird, dass eine der Bürsten blockiert (z. B. durch einen erhöhten Stromfluss in einem Elektromotor oder einen Drehratensensor oder dergleichen), kann die Steuereinrichtung den Antrieb der Antriebsbaugruppe vorübergehend stoppen oder die Drehrichtung vorübergehend umkehren, um den blockierenden Unrat auszuwerfen.

Erfindungsgemäß ist vorgesehen, dass in dem Auffangraum, in einem zwischen dem oberen Endabschnitt und den Bürsten angeordneten Mittelabschnitt, ein Anschlagelement zwischen den Drehachsen der vorderen Bürste und der hinteren Bürste angeordnet ist (vorzugsweise, aber nicht notwendigerweise mittig), um einen Anschlag für von den Bürsten in den Auffangraum beförderte, unerwünschte Festkörper auszubilden, insbesondere für Steine der Gartenfläche.

Das Anschlagelement kann ein Blech (geschlossen oder mit mehreren Durchgangsbohrungen), ein Kunststoffteil (z. B. ein Kunststoffprofilbauteil), ein Gitter, einen oder mehrere Stäbe oder ein sonstiges Bauteil aufweisen. Das Anschlagelement kann unmittelbar an der Saugdüse befestigt, gegebenenfalls aber auch von der Saugdüse beabstandet sein.

Die Saugdüse der Saugereinheit kann insbesondere auf der Seite des Anschlagelements angeordnet sein, die von den Bürsten abgewandt ist.

Das Anschlagelement kann auch von der Saugdüse der Saugereinheit ausgebildet werden.

Die Festkörper prallen somit zunächst gegen das Anschlagelement und werden am unmittelbaren Weitertransport gehindert. Das Anschlagelement blockiert dabei zwar auch in gewisser Weise den Unrat; dieser ist aber in der Regel leichter und kleiner und vermag daher das Anschlagelement leichter zu umgehen als die unerwünschten Festkörper, die aufgrund ihrer größeren Masse auch stärker von dem Anschlagelement abprallen. Insbesondere wenn eine Saugereinheit zum Weitertransport des Unrats vorgesehen ist, vermag der Unrat trotz des Anschlagelements in den Saugradius der Saugereinheit zu gelangen, wodurch der Unrat angesaugt werden kann; die deutlich schwereren Festkörper, beispielsweise Steine, jedoch nicht.

In einer weiterführenden Ausgestaltung der Erfindung kann vorgesehen sein, dass der Auffangraum in einem der Gartenfläche zugewandten, unteren Endabschnitt eine Öffnung zum Auswerfen der unerwünschten Festkörper aufweist.

Die Öffnung kann insbesondere in Vorschubrichtung den Bürsten vor und/oder nachgelagert sein, also beispielsweise vor der vorderen Bürste und/oder hinter der hinteren Bürste angeordnet sein. Die Öffnung ist vorzugsweise groß genug, dass alle Festkörper, die sich zwischen den Bürsten gerade noch hindurchbefördern lassen, problemlos ausgegeben werden können.

Eine Öffnung kann gegebenenfalls auch auf einer der jeweiligen Antriebseinheit der Bürste abgewandten Seite der Drehachse der Bürste angeordnet sein. Vorzugsweise erfolgt der Antrieb der vorderen Bürste und der hinteren Bürste von derselben Seite, wobei die gegenüberliegende Seite daher zur Ausbildung einer Öffnung zur Verfügung stehen kann. Die gegenüberliegende Seite kann aber gegebenenfalls auch zur Abstützung der Bürsten bzw. deren Drehachse bzw. deren Bürstenkörper dienen, um die mechanische Stabilität der Bürsten zu verbessern.

Grundsätzlich kann auch vorgesehen sein, dass der Auffangraum keine Öffnung zum Auswerfen der unerwünschten Festkörper aufweist. In diesem Fall können die Festkörper in dem Auffangraum der Vorrichtung gesammelt werden, insbesondere an einem unteren Ende des Auffangraums. Dies kann insbesondere in Sonderfällen sinnvoll sein, wenn beispielsweise kleinere Steine und/oder gröberer Unrat von der Gartenfläche entfernt und von dem in den Sammelbehälter zu transportierenden Unrat separiert werden sollen. Der Benutzer kann den Auffangraum dann bedarfsweise entleeren, beispielsweise durch eine im Normalbetrieb geschlossene Zugangsklappe.

Es kann vorgesehen sein, dass zwischen dem Auffangraum und den Bürsten ein erstes Schutzblech angeordnet ist, um den Antriebsstrang bzw. die der Antriebsbaugruppe zugewandte Seite der Drehachse vor dem Aufprall von zurückgeschleuderten Festkörpern oder vor dem Einfluss des Unrats (z. B. Feuchtigkeit und Dreck) zu schützen. Optional kann auch ein zweites Schutzblech auf der gegenüberliegenden Seite der Drehachse vorgesehen sein.

In einer Weiterbildung der Erfindung kann vorgesehen sein, dass die Vorrichtung einen Handgriff aufweist, der in einem Normalbetrieb von der Gartenfläche abgewandt, also am oberen Ende der Vorrichtung angeordnet ist, um die Vorrichtung manuell entlang der Gartenfläche zu bewegen.

Die Vorrichtung kann einen Schaft aufweisen, an dessen Ende der Handgriff befestigt ist. Der Schaft weist vorzugsweise einen teleskopierbaren Abschnitt auf, über den die Vorrichtung optimal an die Größe des Benutzers und die sonstigen Gegebenheiten anpassbar ist.

Der Handgriff kann vorzugsweise auch eines oder mehrere Bedienelemente aufweisen, beispielsweise einen Betätigungsschalter oder einen Betätigungstaster, um die Vorrichtung ein- und auszuschalten, also um beispielsweise die Bürste(n) anzutreiben und/oder die optionale Fördereinrichtung zu betätigen. Auch ein Regelschalter (z. B. ein Drehschalter) zur Einstellung der Umdrehungszahl(en) der Bürste(n) und/oder der Saugleistung kann vorgesehen sein, vorzugsweise (aber nicht notwendigerweise) am Handgriff oder am Schaft der Vorrichtung.

Es kann beispielsweise auch noch ein Mittelgriff vorgesehen sein, der vorzugsweise zwischen dem Handgriff und dem unteren Ende der Vorrichtung angeordnet ist, um die Vorrichtung komfortabel mit beiden Händen zu tragen.

Es kann auch ein Tragegurt vorgesehen sein, um die Vorrichtung unterstützend zu dem Handgriff und/oder dem Mittelgriff beispielsweise auf einer Schulter oder auf dem Rücken zu tragen.

Komponenten der Vorrichtung, wie beispielsweise der Sammelbehälter und/oder die Saugereinheit, können beispielsweise auch in der Art eines Rucksacks ausgebildet sein, um ein einfaches Tragen und Transportieren auf dem Rücken zu ermöglichen.

Gemäß einer Weiterbildung der Erfindung kann vorgesehen sein, dass die Vorrichtung wenigstens ein Befestigungsmittel zur Befestigung der Vorrichtung an einem Laubsauger aufweist, insbesondere so, dass der Auffangraum fluidisch mit einer an einem unteren Ende des Laubsaugers angeordneten Saugdüse verbunden ist.

Die Vorrichtung lässt sich hierdurch vorteilhaft als Erweiterungsmodul eines bestehenden Laubsaugers einsetzen.

Gemäß einer Weiterbildung der Erfindung kann außerdem vorgesehen sein, dass die Vorrichtung ein mit dem Auffangraum fluidisch in Verbindung stehendes Anschlussstück aufweist, um die Vorrichtung lösbar mit einem Saugrohr eines Staubsaugers zu verbinden. Das Anschlussstück kann beispielsweise die in dem Auffangraum angeordnete Saugdüse ausbilden oder an einem hinteren, von den Bürsten abgewandten Ende der Saugdüse ausgebildet sein.

Die Vorrichtung lässt sich hierdurch vorteilhaft in Kombination mit einem bestehenden Staubsauger, beispielsweise einem Industriesauger, einsetzen.

Die Erfindung betrifft auch einen Laubsauger, aufweisend eine Saugdüse und eine Vorrichtung gemäß den vorstehenden und nachfolgenden Ausführungen. Die Vorrichtung ist vorzugsweise an einem unteren Ende des Laubsaugers befestigt. Der Auffangraum der Vorrichtung ist vorzugsweise fluidisch mit der Saugdüse verbunden. Die vorstehend im Rahmen der Vorrichtung genannten Merkmale und insbesondere die Merkmale der von Patentanspruch 1 abhängigen Patentansprüche sind als vorteilhafte Weiterbildungen besagten Laubsaugers zu verstehen.

Bei dem Laubsauger handelt es sich vorzugsweise um einen Handlaubsauger. Es kann sich bei dem Laubsauger aber auch um ein Fahrzeug zum Laubsaugen oder um eine mit einem Zugfahrzeug verbindbare Ankupplungseinheit, wie einen ziehbaren Anhänger, handeln.

Im Gegensatz zu der vorstehend bereits beschriebenen Variante der erfindungsgemäßen Vorrichtung, die über Befestigungsmittel lösbar mit einem Laubsauger verbindbar ist, kann die Vorrichtung somit auch als in einen Laubsauger fest bzw. dauerhaft integrierte Einheit ausgebildet sein.

Die Erfindung betrifft außerdem einen Staubsauger, aufweisend ein Saugrohr und eine Vorrichtung gemäß den vorstehenden und nachfolgenden Ausführungen. Der Auffangraum der Vorrichtung ist vorzugsweise fluidisch mit dem Saugrohr verbunden. Die vorstehend im Rahmen der Vorrichtung genannten Merkmale und insbesondere die Merkmale der von Patentanspruch 1 abhängigen Patentansprüche sind als vorteilhafte Weiterbildungen besagten Staubsaugers zu verstehen.

Bei dem Staubsauger handelt es sich vorzugsweise um einen Industriesauger.

Im Gegensatz zu der vorstehend bereits beschriebenen Variante der erfindungsgemäßen Vorrichtung, die über das Anschlussstück lösbar mit einem Staubsauger verbindbar ist, kann die Vorrichtung somit auch als in einen Staubsauger fest bzw. dauerhaft integrierte Einheit ausgebildet sein.

Die Erfindung betrifft auch eine Verwendung einer Vorrichtung gemäß den vorstehenden und nachfolgenden Ausführungen zur Reinigung einer Schottergartenfläche von Laub. Die vorstehend im Rahmen der Vorrichtung genannten Merkmale und insbesondere die Merkmale der von Patentanspruch 1 abhängigen Patentansprüche sind als vorteilhafte Weiterbildungen der besagten Verwendung zu verstehen.

Es hat sich gezeigt, dass sich die vorstehend und nachfolgend beschriebene Vorrichtung ganz besonders vorteilhaft für eine solche Anwendung eignen kann. Die einzelnen Blätter verfangen sich regelmäßig zwischen den Steinen der Schottergartenfläche und sind daher nur sehr aufwändig manuell zu entfernen. Auch ein Laubsauger entfernt das Laub von einer Schottergartenfläche in der Regel nur sehr unzuverlässig, außerdem werden dabei häufig Steine mit aufgesaugt. Die vorgeschlagene Vorrichtung vermag auf sehr effiziente Weise das Laub aus den Steinen zu entfernen, ohne gleichzeitig die Steine der Schottergartenfläche mit aufzusammeln.

Die Erfindung betrifft außerdem auch ein Verfahren zur Reinigung einer Gartenfläche von Unrat gemäß Anspruch 12.

Die vorstehend im Rahmen der Vorrichtung genannten Merkmale und insbesondere die Merkmale der von Patentanspruch 1 abhängigen Patentansprüche sind als vorteilhafte Weiterbildungen des besagten Verfahrens zu verstehen.

Es kann vorgesehen sein, dass die vordere Bürste von der Antriebsbaugruppe entgegen der Vorschubrichtung angetrieben wird.

Es kann vorgesehen sein, dass der Unrat von dem Auffangraum weiter in den Sammelbehälter befördert wird, vorzugsweise mittels der bereits beschriebenen Fördereinrichtung, ganz besonders bevorzugt mittels der bereits beschriebenen Saugereinheit. Hierzu kann die Saugdüse der Saugereinheit den Unrat aus dem Auffangraum absaugen, vorzugsweise aus dem oberen Abschnitt des Saugraums, und in den Sammelbehälter befördern.

Es kann vorgesehen sein, dass die Vorrichtung mittels eines Handgriffs manuell entlang der Gartenfläche bewegt wird.

Es kann vorgesehen sein, dass die Vorrichtung vor dem Einsatz an einem separaten Laubsauger befestigt wird, so dass der Auffangraum fluidisch mit einer Saugdüse des Laubsaugers verbunden ist.

Es kann auch vorgesehen sein, dass die Vorrichtung vor dem Einsatz mit einem Saugrohr eines Staubsaugers verbunden wird, so dass das Saugrohr fluidisch mit dem Auffangraum verbunden ist.

Merkmale, die im Zusammenhang mit einem der Gegenstände der Erfindung beschrieben wurden, namentlich die erfindungsgemäße Vorrichtung, der erfindungsgemäße Laubsauger, der erfindungsgemäße Staubsauger, die erfindungsgemäße Verwendung und das erfindungsgemäße Verfahren, sind selbstverständlich auch für die jeweils anderen Gegenstände vorteilhaft umsetzbar. Ferner können Vorteile, die im Zusammenhang mit einem der Gegenstände der Erfindung genannt wurden, auch auf die jeweils anderen Gegenstände bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielswiese ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erfindungsgemäße Vorrichtung in Verbindung mit einem Laubsauger, während der Reinigung einer Gartenfläche von Unrat;
- Figur 2: eine erfindungsgemäße Vorrichtung in Verbindung mit einem Industriesauger, während der Reinigung einer Gartenfläche von Unrat;
- Figur 3: eine manuell rollbare erfindungsgemäße Vorrichtung, während der Reinigung einer Gartenfläche von Unrat;
- Figur 4: einen Querschnitt durch eine erfindungsgemäße Vorrichtung, insbesondere zur Darstellung der Bürsten, des Auffangraums, eines Anschlagelements und einer Saugdüse; und
- Figur 5: eine perspektivische Einzeldarstellung der Anordnung von Komponenten einer erfindungsgemäßen Vorrichtung innerhalb des Auffangraums.

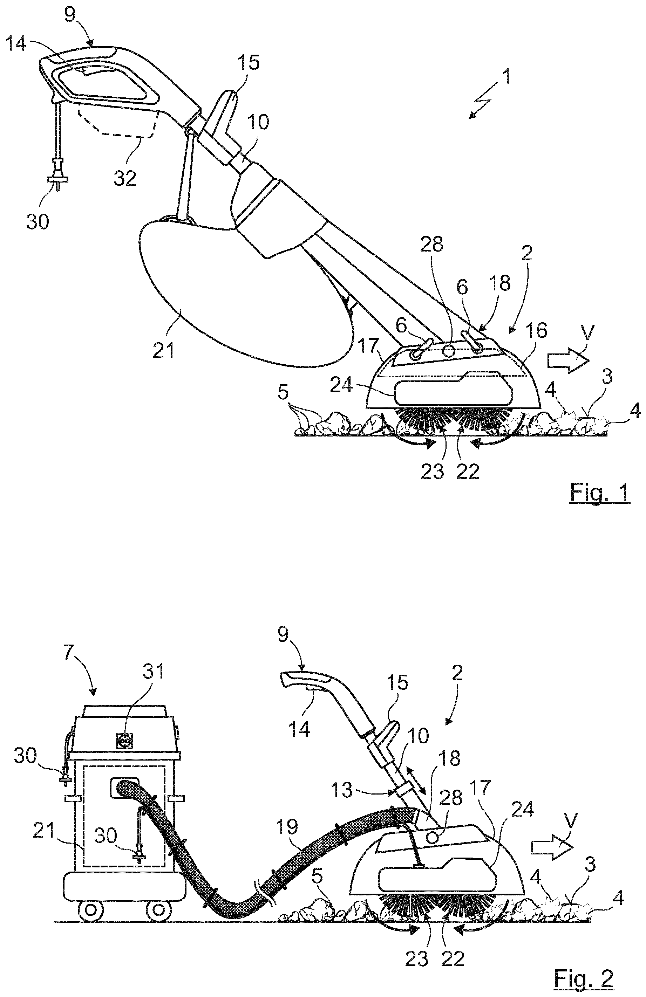

Figur 1 zeigt einen Handlaubsauger 1, an dessen unterem Ende eine Vorrichtung 2 zur Reinigung einer Gartenfläche 3 von Unrat 4 befestigt ist.

Bei der zu reinigenden Gartenfläche handelt es sich in den Ausführungsbeispielen um eine Schottergartenfläche 3, über die eine Vielzahl von Steinen 5 verteilt ist. Bekanntermaßen gestaltet sich insbesondere die gründliche Reinigung einer derartigen Schottergartenfläche 3 als außerordentlich mühselig, da sich der Unrat 4, im Ausführungsbeispiel einzelne Blätter 4, mitunter auch zwischen den Steinen 5 ansammeln und auch miteinander und mit den Steinen 5 verkleben kann. Die vorgeschlagene Vorrichtung 2 kann hier Abhilfe schaffen.

Die Vorrichtung 2 und optional auch der Handlaubsauger 1 können Befestigungsmittel 6 zur Befestigung der Vorrichtung 2 an dem Handlaubsauger 1 aufweisen, wie in Figur 1 angedeutet. Die Vorrichtung 2 kann damit eine Erweiterung für einen herkömmlichen Handlaubsauger 1 darstellen. Die Vorrichtung 2 kann allerdings auch eine untrennbare, dauerhafte Komponente eines Laubsaugers sein.

Ergänzend ist in Figur 2 dargestellt, wie sich die Vorrichtung 2 vorteilhaft mit einem Staubsauger 7 (im Ausführungsbeispiel ein Industriesauger) kombinieren lassen kann.

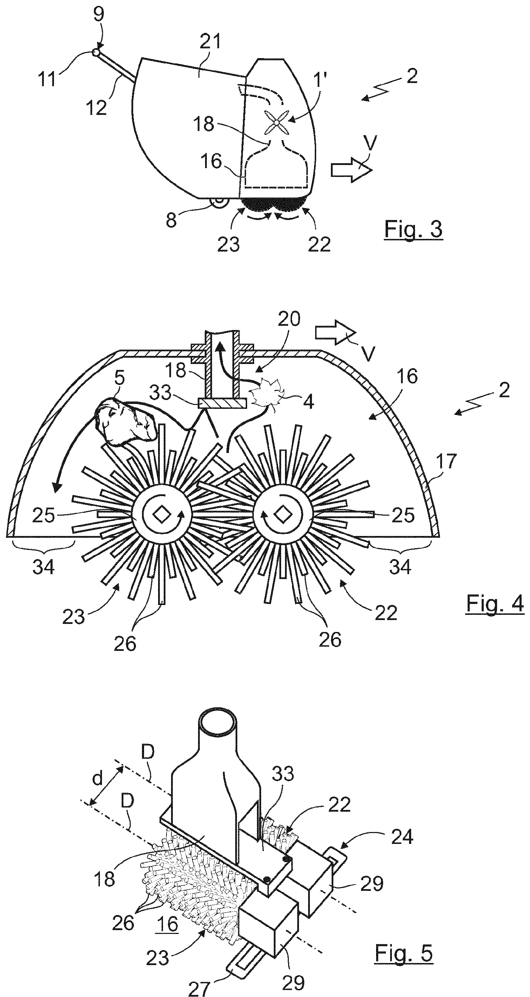

Auch eine manuell schieb- oder ziehbare Ausgestaltung der Vorrichtung 2, wie in Figur 3 angedeutet, kann vorgesehen sein, insbesondere eine Ausgestaltung als Fahrzeug oder eine Kombination mit einem Fahrzeug, beispielsweise als ziehbarer Anhänger. Die Vorrichtung 2 kann dann vorzugsweise eines oder mehrere angetriebene oder nicht angetriebene Räder 8 aufweisen (vgl. Figur 3), die ein Ziehen oder Schieben auf der Gartenfläche 3 erleichtern.

Zur Vereinfachung werden die Komponenten der Vorrichtungen 2 der Figuren 1 bis 3 nachfolgend im Wesentlichen gemeinsam beschrieben, zusammen mit der Schnittdarstellung in Figur 4 und der isometrischen Darstellung der Figur 5.

Die Vorrichtung 2 (oder der Handlaubsauger 1) kann einen, an einem oberen Ende angeordneten Handgriff 9 aufweisen, um die Vorrichtung 2 in einer Vorschubrichtung V entlang der Gartenfläche 3 zu bewegen. Der Handgriff 9 kann insbesondere an einem oberen Ende eines Schaftes 10 angeordnet (vgl. Figuren 1 und 2) oder als Querstrebe 11 eines Gestänges 12 ausgebildet sein. Der Schaft 10 oder das Gestänge 12 können vorzugsweise einen teleskopierbaren Abschnitt 13 aufweisen, wie dies beispielhaft in Figur 2 gezeigt ist. Somit kann sich die Vorrichtung 2 optimal an die Größe des Benutzers und an die Gegebenheiten anpassen lassen. Der Handgriff 9 kann eines oder mehrere Bedienelemente 14 aufweisen, beispielsweise den in den Figuren 1 und 2 jeweils angedeuteten Betätigungstaster 14, um die Vorrichtung 2 ein- und auszuschalten oder um das Betriebsverhalten der Vorrichtung 2 anzupassen.

Es kann gegebenenfalls auch ein Mittelgriff 15 vorgesehen sein, der entlang des Schaftes 10 zwischen dem Handgriff 9 und dem unteren Ende der Vorrichtung 2 angeordnet ist, um die Vorrichtung 2 komfortabel mit beiden Händen zu tragen (vgl. Figuren 1 und 2).

Es ist vorgesehen, dass die Vorrichtung 2 einen Auffangraum 16 zur Akkumulation des von der Gartenfläche 3 aufgesammelten Unrats 4 aufweist. Der Auffangraum 16 kann insbesondere von einer Haube 17 eingegrenzt sein, was besonders gut anhand der Schnittdarstellung in Figur 4 erkennbar ist. Dieser Auffangraum 16 kann fluidisch mit der Saugdüse 18 eine Laubsaugers (beispielsweise des Handlaubsaugers 1 gemäß Figur 1) oder lösbar mit dem Saugrohr 19 des Staubsaugers 7 (vgl. Figur 2) verbunden sein. Auch eine in die Vorrichtung 2 dauerhaft integrierte Saugereinheit 1' (in Figur 3 angedeutet) mit einer Saugdüse 18 zum Aufsaugen des Unrats 4, die in einem oberen Endabschnitt 20 des Auffangraums 16 angeordnet ist, kann aber in allen Ausführungsbeispielen vorgesehen sein. Bei dem oberen Ende der in den Figuren 4 und 5 angedeuteten Saugdüse 18 kann es sich daher gegebenenfalls um ein Anschlussstück zum Anschluss des Saugrohres 19 des Staubsaugers 7 oder um einen Teil einer Rohrverbindung zu der integrierten Saugereinheit handeln.

Die Saugereinheit (in Figur 1 der Handlaubsauger 1, in Figur 2 der Staubsauger 7 und in Figur 3 die integrierte Saugereinheit 1') kann eine Fördereinrichtung ausbilden, um den Unrat 4 von dem Auffangraum 16 weiter in einen Sammelbehälter 21 zu befördern. Bei dem Sammelbehälter 21 kann es sich beispielsweise um den in Figur 1 dargestellten, lösbar an dem Handlaubsauger 1 aufgehängten Auffangsack handeln, den der Benutzer regelmäßig und komfortabel entleeren kann. Auch ein Staubsaugerbeutel oder ein Sammelbereich eines beutellosen Staubsaugers 7 kann den Sammelbehälter 21 ausbilden, insbesondere im Falle des Ausführungsbeispiels der Figur 2.

Die Vorrichtung 2 weist eine vordere Bürste 22 und eine hintere Bürste 23 auf, die jeweils zwischen der Gartenfläche 3 und dem Auffangraum 16 angeordnet sind. Die vordere Bürste 22 ist der hinteren Bürste 23 in Vorschubrichtung V vorgelagert angeordnet und entgegen der Vorschubrichtung V drehbar.

Um die hintere Bürste 23 in Vorschubrichtung V anzutreiben (vgl. Pfeile in den Figuren 1 bis 4), weist die Vorrichtung 2 eine Antriebsbaugruppe 24 auf. Vorzugsweise wird außerdem die vordere Bürste 22 von der Antriebsbaugruppe 24 entgegen der Vorschubrichtung V angetrieben, wie in den Ausführungsbeispielen beispielhaft gezeigt.

Die vordere Bürste 22 und die hintere Bürste 23 drehen sich somit gegenläufig aufeinander zu. Auf diese Weise lässt sich der Unrat 4 sehr effizient zwischen der vorderen Bürste 22 und der hinteren Bürste 23 hindurch bis in den Auffangraum 16 befördern.

Die Bürsten 22, 23 weisen jeweils einen koaxial zu der Drehachse D verlaufenden, zylindrischen Bürstenkörper 25 auf (vgl. die Figuren 4 und 5 in Zusammenschau), über dessen Außenmantelfläche mehreren Borsten 26 verteilt sind. Insbesondere kann vorgesehen sein, dass die vordere Bürste 22 und die hintere Bürste 23 derart relativ zueinander angeordnet sind, dass die Borsten 26 der Bürsten 22, 23 ineinander eingreifen. Besonders bevorzugt ist es sogar, wenn sich die Borsten 26 zumindest einer der Bürsten 22, 23 bis zu der Außenmantelfläche der jeweils anderen Bürste 23, 22 erstrecken, wie dies in Figur 4 erkennbar ist. Der Abstand d zwischen den Bürsten 22, 23 kann auch verstellbar sein, um die Vorrichtung 2 an die jeweilige Gartenfläche 3 optimal anzupassen. In Figur 5 ist beispielhaft eine Linearführungseinheit 27 angedeutet, entlang der sich die Bürsten 22, 23 verschieben und fixieren lassen können. Es kann auch vorgesehen sein, dass die Bürsten 22, 23 austauschbar sind.

Um die Vorrichtung 2 für verschiedene Gartenflächen 3 möglichst effektiv zu gestalten, können die Bürsten 22, 23 außerdem unterschiedliche Borsten 26 aufweisen. Es können beispielsweise zwei Gruppen von Borsten 26 mit jeweils unterschiedlicher Länge, unterschiedlicher Dicke, unterschiedlichem Aufbau und/oder unterschiedlichem Material vorgesehen sein. Die verschiedenen Gruppen von Borsten 26 können in Umfangsrichtung und/oder in Längsrichtung der Bürsten 22, 23 abwechselnd über den Bürstenkörper 25 verteilt angeordnet sein (regelmäßig oder unregelmäßig). In Figur 4 sind beispielhaft zwei Gruppen von Borsten 26 mit jeweils unterschiedlichen Längen angedeutet, um das Prinzip zu verdeutlichen.

Durch die vorgeschlagene Vorrichtung 2 lässt sich die Gartenfläche 3, insbesondere die angedeutete Schottergartenfläche 3, vorteilhaft von Unrat 4, wie Laub, reinigen. Hierzu muss der Benutzer lediglich die Vorrichtung 2 bereitstellen (z. B. als Standalone-Einheit, oder in Kombination mit einem (Hand)Laubsauger 1 oder einem Staubsauger 7), und anschließend in Vorschubrichtung V entlang des gewünschten Pfades über die Gartenfläche 3 bewegen, so dass die vordere Bürste 22 der hinteren Bürste 23 vorgelagerter ist. Durch die gegenläufige Drehung der Bürsten 22, 23 wird der Unrat 4 zwischen der vorderen Bürste 22 und der hinteren Bürste 23 hindurch bis in den Auffangraum 16 befördert. Ausgehend hiervon kann der Unrat 4 vorzugsweise mittels der bereits genannten Fördereinrichtung, insbesondere der Saugereinheit 1, 1', 7, weiter in den Sammelbehälter 21 befördert werden.

Um sich optimal an den Untergrund bzw. an die Gartenfläche 3 anzupassen, kann die Vorrichtung 2, insbesondere der Auffangraum 16 bzw. die Haube 17 mit den in der Haube angeordneten, einzelnen Komponenten, pendelnd aufgehängt sein. Beispielhaft ist eine entsprechende Pendelachse 28 in den Figuren 1 und 2 angedeutet. Auch eine pendelnde Aufhängung der einzelnen Bürsten 22, 23 kann vorgesehen sein.

Die Antriebsbaugruppe 24 kann eine oder mehrere Antriebseinheiten 29 aufweisen. In den Ausführungsbeispielen ist jeweils ein Elektromotor 29 vorgesehen, um eine jeweilige Bürste 22, 23 unmittelbar anzutreiben (vgl. Figur 5). Es kann aber beispielsweise auch eine einzige Antriebseinheit bzw. ein einziger Elektromotor vorgesehen sein, der beide Bürsten 22, 23 antreibt, wobei dann ein Getriebe vorgesehen sein kann, um die unterschiedlichen Drehrichtungen zu bewirken.

Die elektrische Versorgung der Elektromotoren 29 und/oder der Saugereinheit 1, 1', 7 kann kabelgebunden erfolgen. Die Vorrichtung 2 kann also beispielsweise über einen Netzstecker 30 mit einer Haushaltssteckdose verbindbar sein (vgl. insbesondere Figur 1). Manche Staubsauger 7, insbesondere Industriesauger, weisen auch eine integrierte Steckdose 31 auf, die sich vorteilhaft zur Stromversorgung der Vorrichtung 2 eignen kann (vgl. Figur 2). In diesem Fall kann beispielsweise optional vorgesehen sein, dass der Staubsauger 7 die von der Steckdose 31 bezogene elektrische Leistung überwacht und den Saugbetrieb automatisch startet, wenn die Vorrichtung 2 von der Steckdose 31 des Staubsaugers 7 elektrische Energie bezieht oder die Energieentnahme einen definierten Schwellenwert überschreitet, also wenn beispielsweise der zumindest eine Elektromotor 29 von dem Benutzer über den Betätigungstaster 14 der Vorrichtung 2 eingeschaltet wird. Somit kann über den Betätigungstaster 14 mittelbar auch der Staubsauger 7 ein- und ausgeschaltet werden, was den Bedienkomfort bei der Kombination der Vorrichtung 2 mit einem Staubsauger 7 erhöhen kann.

Es kann grundsätzlich auch eine kabellose Energieversorgung vorgesehen sein. Beispielsweise kann die Vorrichtung 2 eine Schnittstelle zur Aufnahme eines oder mehrerer Akkupacks 32 aufweisen (in Figur 1 unterhalb des Handgriffes 9 angedeutet).

Insbesondere wenn die Vorrichtung 2 als Fahrzeug zum Laubsaugen oder als mit einem Zugfahrzeug verbindbare Ankupplungseinheit, wie ein ziehbarer Anhänger, ausgebildet ist, kann auch eine Energieversorgung durch den entsprechenden Verbrennungsmotor oder Elektromotor des Fahrzeugs vorgesehen sein. Beispielsweise kann das Gebläse der Saugereinheit 1, 1', 7 dann von dem Verbrennungsmotor oder Elektromotor des Fahrzeugs betrieben werden.

Eine vorteilhafte Optimierung der Vorrichtung 2 kann sich durch ein Anschlagelement 33 ergeben, das in dem Auffangraum 16 in einem zwischen dem oberen Endabschnitt 20 und den Bürsten 22, 23 angeordneten Mittelabschnitt mittig zwischen den Drehachsen D der vorderen Bürste 22 und der hinteren Bürste 23 angeordnet ist. Ein solches Anschlagelement 33 ist beispielhaft in den Figuren 4 und 5 angedeutet. Das Anschlagelement 33 kann einen Anschlag für von den Bürsten 22, 23 in den Auffangraum 16 beförderte, unerwünschte Festkörper 5 ausbilden, insbesondere für Steine 5 der Gartenfläche 3. Die Festkörper 5 werden daher an einer direkten Beförderung in den Saugradius der Saugdüse 18 gehindert, indem sie an dem Anschlagelement 33 abprallen. Da der zu fördernde Unrat 4 in der Regel hingegen deutlich kleiner und leichter ist, vermag dieser an dem Anschlagelement 33 seitlich vorbeizugleiten und wird schließlich von der Saugdüse 18 aufgenommen.

Das Anschlagelement 33 kann grundsätzlich auch ein unterer Abschnitt der Saugdüse 18 sein bzw. die Saugdüse 18 kann an ihrem den Bürsten 22, 23 zugewandten Ende zumindest bereichsweise geschlossen sein.

Insbesondere wenn der Auffangraum 16 in einem der Gartenfläche 3 zugewandten, unteren Endabschnitt eine Öffnung 34 zum Auswerfen der unerwünschten Festkörper 5 aufweist, können die gegen das Anschlagelement 33 geprallten Festkörper 5 unmittelbar wieder in Richtung Gartenfläche 3 ausgeworfen werden (vgl. Figur 4).

Das Anschlagelement 33 ist allerdings nicht für alle Anwendungsfälle gleichermaßen vorteilhaft. Wenn beispielsweise schwererer Unrat, wie Nüsse, Kronkorken, Zigarettenstummel oder dergleichen mit der Vorrichtung 2 aufgesammelt werden sollen kann es vorteilhaft sein, auf ein Anschlagelement 33 zu verzichten (es kann aber natürlich auch die Saugleistung erhöht werden). Optional kann vorgesehen sein, dass das Anschlagelement 33 von dem Benutzer wahlweise montierbar oder demontierbar ist. Ein Gehäusebauteil der Vorrichtung 2, beispielsweise die Haube 17, kann einen Einschub aufweisen, um das Anschlagelement 33 bedarfsweise in die Haube 17 einzuschieben. Es kann auch vorgesehen sein, verschiedene Anschlagelemente 33, beispielsweise Anschlagelemente 33 mit verschiedenen Breiten untereinander auszutauschen. Auch ein verdreh- oder verkippbares Anschlagelement 33 kann vorgesehen sein, um wahlweise eine funktional große Anschlagfläche oder eine kleine Anschlagfläche zu präsentieren.

## Patentansprüche

1. Vorrichtung (2) zur Reinigung einer Gartenfläche (3) von Unrat (4), insbesondere zur Reinigung einer Schottergartenfläche von Laub, die in einer Vorschubrichtung (V) entlang der Gartenfläche (3) bewegbar ist, aufweisend einen Auffangraum (16) zur Akkumulation des Unrats (4), eine vordere Bürste (22), eine hintere Bürste (23) und eine Antriebsbaugruppe (24), wobei die Bürsten (22, 23) jeweils zwischen der Gartenfläche (3) und dem Auffangraum (16) angeordnet sind, wobei die vordere Bürste (22) in Vorschubrichtung (V) der hinteren Bürste (23) vorgelagert und entgegen der Vorschubrichtung (V) drehbar ist, so dass sich jeweils Borsten (26) der vorderen Bürste (22), die der Gartenfläche (3) zugewandt sind, in Richtung der hinteren Bürste (23) bewegen, und wobei die hintere Bürste (23) von der Antriebsbaugruppe (24) in Vorschubrichtung (V) angetrieben ist, so dass sich jeweils Borsten (26) der hinteren Bürste (23), die der Gartenfläche (3) zugewandt sind, in Richtung der vorderen Bürste (22) bewegen, um den Unrat (4) zwischen der vorderen Bürste (22) und der hinteren Bürste (23) hindurch bis in den Auffangraum (16) zu befördern, weiter aufweisend eine Fördereinrichtung (1, 7), um den Unrat (4) von dem Auffangraum (16) weiter zu befördern, wobei die Fördereinrichtung eine Saugereinheit (1, 1', 7) mit einer Saugdüse (18) zum Aufsaugen des Unrats (4) aufweist, die in einem von den Bürsten (22, 23) abgewandten, oberen Endabschnitt (20) des Auffangraums (16) angeordnet ist, um den Unrat (4) unmittelbar aufzusaugen, wenn dieser durch die Bürsten (22, 23) hindurchbefördert wird,
**dadurch gekennzeichnet , dass**
in dem Auffangraum (16), in einem zwischen dem oberen Endabschnitt (20) und den Bürsten (22, 23) angeordneten Mittelabschnitt, ein Anschlagelement (33) zwischen den Drehachsen (D) der vorderen Bürste (22) und der hinteren Bürste (23) angeordnet ist, um einen Anschlag für von den Bürsten (22, 23) in den Auffangraum (16) beförderte, unerwünschte Festkörper (5) auszubilden, insbesondere für Steine der Gartenfläche (3).

2. Vorrichtung (2) nach Anspruch 1,
**dadurch gekennzeichnet , dass**
die vordere Bürste (22) von der Antriebsbaugruppe (24) entgegen der Vorschubrichtung (V) angetrieben ist.

3. Vorrichtung (2) nach Anspruch 1 oder 2,
**dadurch gekennzeichnet , dass**
die Bürsten (22, 23) jeweils einen koaxial zu der Drehachse (D) verlaufenden, zylindrischen Bürstenkörper (25) aufweisen, über deren Außenmantelfläche mehreren Borsten (26) der Bürste (22, 23) verteilt sind, wobei die vordere Bürste (22) und die hintere Bürste (23) derart relativ zueinander angeordnet sind, dass die Borsten (26) der Bürsten (22, 23) ineinander eingreifen.

4. Vorrichtung (2) nach Anspruch 3,
**dadurch gekennzeichnet , dass**
die sich Borsten (26) zumindest einer der Bürsten (22, 23) bis zu der Außenmantelfläche der jeweils anderen Bürste (22, 23) erstrecken.

5. Vorrichtung (2) nach Anspruch 3 oder 4,
**dadurch gekennzeichnet , dass**
zumindest eine der Bürsten (22, 23) unterschiedlich lange Borsten (26) aufweist.

6. Vorrichtung (2) nach einem der Ansprüche 1 bis 5,
**dadurch gekennzeichnet , dass**
die Antriebsbaugruppe (24) wenigstens einen Elektromotor (29) aufweist, um zumindest die hintere Bürste (23) anzutreiben.

7. Vorrichtung (2) nach einem der Ansprüche 1 bis 6,
**gekennzeichnet durch**
einen, in einem Normalbetrieb von der Gartenfläche (3) abgewandten, oberen Ende der Vorrichtung (2) angeordneten Handgriff (9), um die Vorrichtung (2) manuell entlang der Gartenfläche (3) zu bewegen.

8. Vorrichtung (2) nach einem der Ansprüche 1 bis 7,
**gekennzeichnet durch**
wenigstens ein Befestigungsmittel (6) zur Befestigung der Vorrichtung (2) an einem Laubsauger (1), so dass der Auffangraum (16) fluidisch mit einer an einem unteren Ende des Laubsaugers (1) angeordneten Saugdüse (18) verbunden ist.

9. Vorrichtung (2) nach einem der Ansprüche 1 bis 8,
**gekennzeichnet durch**
ein mit dem Auffangraum (16) fluidisch in Verbindung stehendes Anschlussstück, um die Vorrichtung (2) lösbar mit einem Saugrohr (19) eines Staubsaugers (7) zu verbinden.

10. Laubsauger (1), insbesondere Handlaubsauger, aufweisend eine Saugdüse (18) und eine Vorrichtung (2) nach einem der Ansprüche 1 bis 9, wobei die Vorrichtung (2) an einem unteren Ende des Laubsaugers (1) befestigt und der Auffangraum (16) fluidisch mit der Saugdüse (18) verbunden ist.

11. Verwendung einer Vorrichtung (2) nach einem der Ansprüche 1 bis 9 zur Reinigung einer Schottergartenfläche (3) von Laub (4).

12. Verfahren zur Reinigung einer Gartenfläche (3) von Unrat (4), insbesondere zur Reinigung einer Schottergartenfläche von Laub, aufweisend zumindest die folgenden Verfahrensschritte:
a) Bereitstellen einer Vorrichtung (2), die einen Auffangraum (16) zur Akkumulation des Unrats (4), eine vordere Bürste (22), eine hintere Bürste (23) und eine Antriebsbaugruppe (24) aufweist, wobei die Bürsten (22, 23) jeweils zwischen der Gartenfläche (3) und dem Auffangraum (16) angeordnet werden, weiter aufweisend eine Fördereinrichtung (1, 7), um den Unrat (4) von dem Auffangraum (16) weiter zu befördern, wobei die Fördereinrichtung eine Saugereinheit (1, 1', 7) mit einer Saugdüse (18) zum Aufsaugen des Unrats (4) aufweist, die in einem von den Bürsten (22, 23) abgewandten, oberen Endabschnitt (20) des Auffangraums (16) angeordnet ist, um den Unrat (4) unmittelbar aufzusaugen, wenn dieser durch die Bürsten (22, 23) hindurchbefördert wird;
b) Bewegen der Vorrichtung (2) in einer Vorschubrichtung (V) entlang der Gartenfläche (3), so dass die vordere Bürste (22) der hinteren Bürste (23) vorgelagerter ist;
c) Drehen der vorderen Bürste (22) entgegen der Vorschubrichtung (V), so dass sich jeweils Borsten (26) der vorderen Bürste (22), die der Gartenfläche (3) zugewandt sind, in Richtung der hinteren Bürste (23) bewegen;
d) Antreiben der hinteren Bürste (23) in Vorschubrichtung (V) mittels der Antriebsbaugruppe (24), so dass sich jeweils Borsten (26) der hinteren Bürste (23), die der Gartenfläche (3) zugewandt sind, in Richtung der vorderen Bürste (22) bewegen; und
e) Befördern des Unrats (4) zwischen der vorderen Bürste (22) und der hinteren Bürste (23) hindurch bis in den Auffangraum (16),
**dadurch gekennzeichnet , dass**
in dem Auffangraum (16), in einem zwischen dem oberen Endabschnitt (20) und den Bürsten (22, 23) angeordneten Mittelabschnitt, ein Anschlagelement (33) zwischen den Drehachsen (D) der vorderen Bürste (22) und der hinteren Bürste (23) angeordnet ist, um einen Anschlag für von den Bürsten (22, 23) in den Auffangraum (16) beförderte, unerwünschte Festkörper (5) auszubilden, insbesondere für Steine der Gartenfläche (3).

## Claims

1. Device (2) for cleaning a garden area (3) of debris (4), in particular for cleaning a gravel garden area from leaves, which is movable in a feed direction (V) along the garden area (3), comprising a collecting space (16) for accumulating the debris (4), a front brush (22), a rear brush (23), and a drive assembly (24), wherein the brushes (22, 23) are each arranged between the garden area (3) and the collecting space (16), wherein the front brush (22) is arranged upstream of the rear brush (23) in the feed direction (V) and is rotatable counter to the feed direction (V), such that bristles (26) of the front brush (22) facing the garden area (3) move towards the rear brush (23), and wherein the rear brush (23) is driven by the drive assembly (24) in the feed direction (V), such that bristles (26) of the rear brush (23) facing the garden area (3) move towards the front brush (22), in order to convey the debris (4) through between the front brush (22) and the rear brush (23) into the collecting space (16), further comprising a conveying device (1, 7) for further conveying the debris (4) from the collecting space (16), wherein the conveying device comprises a suction unit (1, 1', 7) with a suction nozzle (18) for sucking up the debris (4), which is arranged in an upper end section (20) of the collecting space (16) facing away from the brushes (22, 23), in order to directly suck up the debris (4) when it is conveyed through the brushes (22, 23),
**characterized in that**
in the collecting space (16), in a middle section arranged between the upper end section (20) and the brushes (22, 23), a stop element (33) is arranged between the rotational axes (D) of the front brush (22) and the rear brush (23), in order to form a stop for undesired solid bodies (5) conveyed by the brushes (22, 23) into the collecting space (16), in particular for stones of the garden area (3).

2. Device (2) according to claim 1,
**characterized in that**
the front brush (22) is driven by the drive assembly (24) counter to the feed direction (V).

3. Device (2) according to claim 1 or 2,
**characterized in that**
the brushes (22, 23) each comprise a cylindrical brush body (25) extending coaxially to the rotational axis (D), over the outer circumferential surface of which a plurality of bristles (26) of the brush (22, 23) are distributed, wherein the front brush (22) and the rear brush (23) are arranged relative to each other such that the bristles (26) of the brushes (22, 23) intermesh.

4. Device (2) according to claim 3,
**characterized in that**
the bristles (26) of at least one of the brushes (22, 23) extend up to the outer circumferential surface of the respective other brush (22, 23).

5. Device (2) according to claim 3 or 4,
**characterized in that**
at least one of the brushes (22, 23) comprises bristles (26) of different lengths.

6. Device (2) according to any one of claims 1 to 5,
**characterized in that**
the drive assembly (24) comprises at least one electric motor (29) in order to drive at least the rear brush (23).

7. Device (2) according to any one of claims 1 to 6,
**characterized by**
a handle (9) arranged at an upper end of the device (2) facing away from the garden area (3) in normal operation, in order to manually move the device (2) along the garden area (3).

8. Device (2) according to any one of claims 1 to 7,
**characterized by**
at least one fastening means (6) for fastening the device (2) to a leaf vacuum (1), such that the collecting space (16) is fluidically connected to a suction nozzle (18) arranged at a lower end of the leaf vacuum (1).

9. Device (2) according to any one of claims 1 to 8,
**characterized by**
a connecting piece fluidically connected to the collecting space (16), in order to releasably connect the device (2) to a suction pipe (19) of a vacuum cleaner (7).

10. Leaf vacuum (1), in particular a hand leaf vacuum, comprising a suction nozzle (18) and a device (2) according to any one of claims 1 to 9, wherein the device (2) is fastened to a lower end of the leaf vacuum (1) and the collecting space (16) is fluidically connected to the suction nozzle (18).

11. Use of a device (2) according to any one of claims 1 to 9 for cleaning a gravel garden area (3) from leaves (4).

12. Method for cleaning a garden area (3) of debris (4), in particular for cleaning a gravel garden area from leaves, comprising at least the following method steps:
a) providing a device (2) comprising a collecting space (16) for accumulating the debris (4), a front brush (22), a rear brush (23), and a drive assembly (24), wherein the brushes (22, 23) are each arranged between the garden area (3) and the collecting space (16), further comprising a conveying device (1, 7) for further conveying the debris (4) from the collecting space (16), wherein the conveying device comprises a suction unit (1, 1', 7) with a suction nozzle (18) for sucking up the debris (4), which is arranged in an upper end section (20) of the collecting space (16) facing away from the brushes (22, 23), in order to directly suck up the debris (4) when it is conveyed through the brushes (22, 23);
b) moving the device (2) in a feed direction (V) along the garden area (3), such that the front brush (22) is arranged upstream of the rear brush (23);
c) rotating the front brush (22) counter to the feed direction (V), such that bristles (26) of the front brush (22) facing the garden area (3) move towards the rear brush (23);
d) driving the rear brush (23) in the feed direction (V) by means of the drive assembly (24), such that bristles (26) of the rear brush (23) facing the garden area (3) move towards the front brush (22); and
e) conveying the debris (4) through between the front brush (22) and the rear brush (23) into the collecting space (16),
**characterized in that**
in the collecting space (16), in a middle section arranged between the upper end section (20) and the brushes (22, 23), a stop element (33) is arranged between the rotational axes (D) of the front brush (22) and the rear brush (23), in order to form a stop for undesired solid bodies (5) conveyed by the brushes (22, 23) into the collecting space (16), in particular for stones of the garden area (3).

## Revendications

1. Dispositif (2) pour nettoyer une surface de jardin (3) des débris (4), en particulier pour nettoyer une surface de jardin en gravier des feuilles, pouvant être déplacé dans une direction d'avance (V) le long de la surface de jardin (3), comprenant une chambre de collecte (16) pour l'accumulation des débris (4), une brosse avant (22), une brosse arrière (23) et un groupe d'entraînement (24), les brosses (22, 23) étant chacune disposées entre la surface de jardin (3) et la chambre de collecte (16), la brosse avant (22) étant disposée en amont de la brosse arrière (23) dans la direction d'avance (V) et pouvant tourner à contre-sens de la direction d'avance (V), de sorte que les poils (26) de la brosse avant (22) orientés vers la surface de jardin (3) se déplacent en direction de la brosse arrière (23), et la brosse arrière (23) étant entraînée par le groupe d'entraînement (24) dans la direction d'avance (V), de sorte que les poils (26) de la brosse arrière (23) orientés vers la surface de jardin (3) se déplacent en direction de la brosse avant (22), afin de transporter les débris (4) entre la brosse avant (22) et la brosse arrière (23) jusqu'à la chambre de collecte (16), comprenant en outre un dispositif de transport (1, 7) pour transporter les débris (4) au-delà de la chambre de collecte (16), le dispositif de transport comprenant une unité d'aspiration (1, 1', 7) avec une buse d'aspiration (18) pour aspirer les débris (4), ladite buse étant disposée dans une section terminale supérieure (20) de la chambre de collecte (16) opposée aux brosses (22, 23), afin d'aspirer directement les débris (4) lorsqu'ils sont transportés à travers les brosses (22, 23),
**caractérisé en ce que**,
dans la chambre de collecte (16), dans une section intermédiaire disposée entre la section terminale supérieure (20) et les brosses (22, 23), un élément d'arrêt (33) est disposé entre les axes de rotation (D) de la brosse avant (22) et de la brosse arrière (23), afin de former une butée pour des corps solides indésirables (5) transportés par les brosses (22, 23) dans la chambre de collecte (16), en particulier pour des pierres de la surface de jardin (3).

2. Dispositif (2) selon la revendication 1,
**caractérisé en ce que**
la brosse avant (22) est entraînée par le groupe d'entraînement (24) à contre-sens de la direction d'avance (V).

3. Dispositif (2) selon la revendication 1 ou 2,
**caractérisé en ce que**
les brosses (22, 23) présentent chacune un corps de brosse cylindrique (25) s'étendant coaxialement à l'axe de rotation (D), sur la surface périphérique extérieure duquel plusieurs poils (26) de la brosse (22, 23) sont répartis, la brosse avant (22) et la brosse arrière (23) étant disposées l'une par rapport à l'autre de telle manière que les poils (26) des brosses (22, 23) s'engrènent les uns dans les autres.

4. Dispositif (2) selon la revendication 3,
**caractérisé en ce que**
les poils (26) d'au moins une des brosses (22, 23) s'étendent jusqu'à la surface périphérique extérieure de l'autre brosse (22, 23).

5. Dispositif (2) selon la revendication 3 ou 4,
**caractérisé en ce que**
au moins une des brosses (22, 23) présente des poils (26) de différentes longueurs.

6. Dispositif (2) selon l'une des revendications 1 à 5,
**caractérisé en ce que**
le groupe d'entraînement (24) comporte au moins un moteur électrique (29) pour entraîner au moins la brosse arrière (23).

7. Dispositif (2) selon l'une des revendications 1 à 6,
**caractérisé par**
une poignée (9) disposée, en fonctionnement normal, à l'extrémité supérieure du dispositif (2) opposée à la surface de jardin (3), afin de déplacer manuellement le dispositif (2) le long de la surface de jardin (3).

8. Dispositif (2) selon l'une des revendications 1 à 7,
**caractérisé par**
au moins un moyen de fixation (6) pour fixer le dispositif (2) à un aspirateur de feuilles (1), de telle sorte que la chambre de collecte (16) soit en communication fluidique avec une buse d'aspiration (18) disposée à une extrémité inférieure de l'aspirateur de feuilles (1).

9. Dispositif (2) selon l'une des revendications 1 à 8,
**caractérisé par**
un raccord en communication fluidique avec la chambre de collecte (16), afin de relier de manière amovible le dispositif (2) à un tube d'aspiration (19) d'un aspirateur (7).

10. Aspirateur de feuilles (1), en particulier aspirateur de feuilles à main, comprenant une buse d'aspiration (18) et un dispositif (2) selon l'une des revendications 1 à 9, le dispositif (2) étant fixé à une extrémité inférieure de l'aspirateur de feuilles (1) et la chambre de collecte (16) étant en communication fluidique avec la buse d'aspiration (18).

11. Utilisation d'un dispositif (2) selon l'une des revendications 1 à 9 pour nettoyer une surface de jardin en gravier (3) des feuilles (4).

12. Procédé pour nettoyer une surface de jardin (3) des débris (4), en particulier pour nettoyer une surface de jardin en gravier des feuilles, comprenant au moins les étapes suivantes:
a) mise à disposition d'un dispositif (2) qui comporte une chambre de collecte (16) pour l'accumulation des débris (4), une brosse avant (22), une brosse arrière (23) et un groupe d'entraînement (24), les brosses (22, 23) étant disposées chacune entre la surface de jardin (3) et la chambre de collecte (16), comprenant en outre un dispositif de transport (1, 7) pour transporter les débris (4) au-delà de la chambre de collecte (16), le dispositif de transport comprenant une unité d'aspiration (1, 1', 7) avec une buse d'aspiration (18) pour aspirer les débris (4), ladite buse étant disposée dans une section terminale supérieure (20) de la chambre de collecte (16) opposée aux brosses (22, 23), afin d'aspirer directement les débris (4) lorsqu'ils sont transportés à travers les brosses (22, 23);
b) déplacement du dispositif (2) dans une direction d'avance (V) le long de la surface de jardin (3), de sorte que la brosse avant (22) soit disposée en amont de la brosse arrière (23);
c) rotation de la brosse avant (22) à contre-sens de la direction d'avance (V), de sorte que les poils (26) de la brosse avant (22) orientés vers la surface de jardin (3) se déplacent en direction de la brosse arrière (23);
d) entraînement de la brosse arrière (23) dans la direction d'avance (V) au moyen du groupe d'entraînement (24), de sorte que les poils (26) de la brosse arrière (23) orientés vers la surface de jardin (3) se déplacent en direction de la brosse avant (22); et
e) transport des débris (4) entre la brosse avant (22) et la brosse arrière (23) jusqu'à la chambre de collecte (16),
**caractérisé en ce que**
dans la chambre de collecte (16), dans une section intermédiaire disposée entre la section terminale supérieure (20) et les brosses (22, 23), un élément d'arrêt (33) est disposé entre les axes de rotation (D) de la brosse avant (22) et de la brosse arrière (23), afin de former une butée pour des corps solides indésirables (5) transportés par les brosses (22, 23) dans la chambre de collecte (16), en particulier pour des pierres de la surface de jardin (3).
